# EUROPÄISCHE PATENTSCHRIFT

(11) **EP 2 125 358 B1**
(45) Veröffentlichungstag und Bekanntmachung des Hinweises auf die Patenterteilung: **29.01.2014**
(21) Anmeldenummer: 07822388.0
(22) Anmeldetag: 08.11.2007
(51) Int. Cl.: B32B 3/20, B32B 1/08, C04B 35/00

(54) **LEICHTBAU-FORMTEIL UND ENTSPRECHENDES HERSTELLUNGSVERFAHREN**
LIGHTWEIGHT MOULDED PIECE AND CORRESPONDING PRODUCTION METHOD
PIÈCE MOULÉE LÉGÈRE ET PROCÉDÉ DE FABRICATION CORRESPONDANT

(30) Priorität: 28.11.2006 DE 102006056167
(43) Veröffentlichungstag der Anmeldung: 02.12.2009
(73) Patentinhaber: Fachhochschule Landshut, 84036 Landshut (DE)
(72) Erfinder: HUBER, Otto, 84140 Gangkofen (DE); KLAUS, Hubert, 84030 Ergolding (DE)
(74) Vertreter: Isarpatent
(86) Internationale Anmeldenummer: PCT/EP2007/062086
(87) Internationale Veröffentlichungsnummer: WO 2008/064985

(56) Entgegenhaltungen:
- EP-A- 0 851 808
- EP-A- 0 922 568
- EP-A- 1 188 730
- DE-A1- 3 123 134
- DE-A1- 3 126 242
- DE-U1-202007 007 930

## Beschreibung

### STAND DER TECHNIK

Die vorliegende Erfindung betrifft ein Leichtbau-Formteil und ein entsprechendes Herstellungsverfahren.

Leichtbau-Werkstoffe bzw. Formteile finden heutzutage in vielen Bereichen der Technik Anwendung, wie z.B. im Automobilbau, Flugzeugbau und Schiffsbau sowie allgemein im Verkehrswesen. Sie zeichnen sich wegen ihrer hohen Steifigkeit, Festigkeit und ihrem guten Energieabsorptionsvermögen sowie im Vergleich zu herkömmlichen Konstruktionsmaterialien geringen Dichte aus und ermöglichen eine wirtschaftliche Herstellung stark beanspruchter Bauelemente. Besonders interessant sind Leichtbau-Werkstoffe mit einer Dichte unterhalb von 1,0 kg/dm³, deren Dichte unterhalb der Dichte der meisten gängigen Kunststoffe liegt.

Herkömmliche Leichtbau-Formteile, wie z.B. Sandwichstrukturen mit leichtem Wabenkern, sind in der Regel nicht gekrümmt herstellbar. Mit Sandwichkernen, die über Falttechniken auf Papier- oder Metallbasis (dünne Bleche) bzw. als Wellstrukturen hergestellt werden, können im Allgemeinen nur einfach gekrümmte Sandwichelemente hergestellt werden.

Abhilfe schaffen hier Kerne, die aus zellularen Werkstoffen oder zellularen Verbundwerkstoffen aus syntaktischem Schaum bestehen können, mit denen auch mehrfach gekrümmte Sandwichelemente hergestellt werden können. Bei konventionellen zellularen Werkstoffen ist die Schubfestigkeit im Vergleich zur Druckfestigkeit sehr gering. Dies ist für die im Allgemeinen querkraftbelasteten Sandwichkonstruktionen ungünstig.

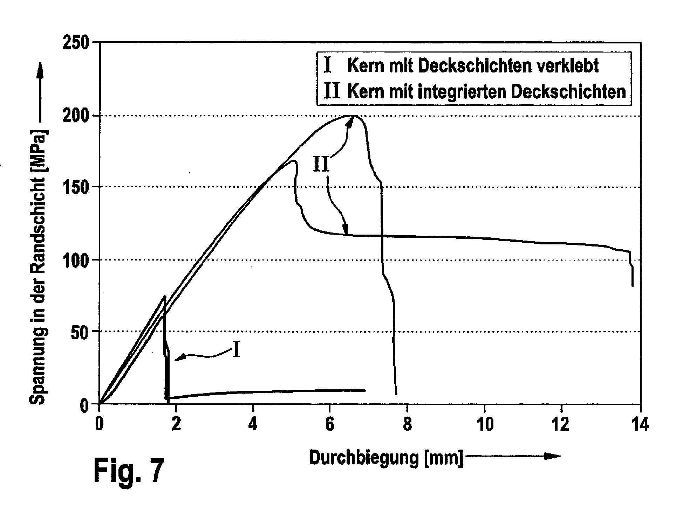

Bei zellularen Verbundwerkstoffen (z.B. Mineralschaumgranulate in Polyamid-Matrix) beträgt das Verhältnis der Schubfestigkeit zur Druckfestigkeit typischerweise 0,6. Der entsprechende Wert für Aluminiumschäume beträgt beispielsweise nur 0,15. Siehe dazu Rausch G. et al., Foaminal® - Eigenschaftsübersicht - Konstruktionsrichtlinien - Version 1.8, Fraunhoferinstitut für Fertigungstechnik und angewandte Materialforschung, 2005. Aus diesem Grund haben Sandwichstrukturen mit zellularen Verbundwerkstoffen als Kernmaterial ein großes Leichtbaupotenzial. Dieses Potenzial kann mit aufgeklebten bzw. auflaminierten Deckschichten nicht ausgeschöpft werden, da in der Verbindungsschicht zwischen Kern und Deckschicht beim Gebrauch häufig eine Schädigung (Delamination) einsetzt. Fig. 7 zeigt die Ergebnisse von Dreipunktbiegeversuchen an Sandwichbalken mit aufgeklebten (Polyuhrethanklebstoff) bzw. integrierten Deckschichten. Die Kerne bestehen aus zellularem Verbundwerkstoff mit Glasschaumgranulaten, die in Acrylharz eingebettet sind. Durch die Integration der Deckschicht erhöht sich die Festigkeit des Sandwichbalkens um bis zu 200% im Vergleich zu den Sandwichbalken mit aufgeklebten Deckschichten.

Die Aufgabe der vorliegenden Erfindung besteht in der Bereitstellung eines verbesserten Leichtbau-Formteils und eines entsprechenden Herstellungsverfahrens, wobei ein festeres und stabileres Leichtbau-Formteil erzeugt werden kann.

Die Erfindung schafft das in Anspruch 1 angegebene LeichtbauFormteil bzw. das in Anspruch 11 angegebene Herstellungsverfahren.

Die vorliegende Erfindung ermöglicht es, den Klebeprozess bzw. Laminierungsprozess bei der Sandwichherstellung zu eliminieren und damit das Leichtbaupotenzial des leichten Kernmaterials, beispielsweise eines zellularen Verbundwerkstoffes oder eines anderen syntaktischen Schaums, voll auszuschöpfen und eine wirtschaftliche Fertigung zu ermöglichen.

Die der vorliegenden Erfindung zugrundeliegende Idee besteht darin, den Klebeprozess bzw. Laminierungsprozess zwischen Kern und eine oder mehrere oberflächliche oder oberflächennahe Deckschicht(en) durch eine Integration der Deckschichtherstellung in den Herstellungsprozess des Kerns zu eliminieren.

Die Erfindung schafft Sandwichelemente bestehend aus einem Kern aus einem Leichtbau-Verbundwerkstoff mit einer oder mehreren integrierten verstärkenden Deckschichten. Die Sandwichelemente können schmal (Sandwichbalken) oder breit (Sandwichplatten) sein. Sie können eben oder gekrümmt (einfach oder mehrfach) sein. Weiterhin werden auch neuartige Leichtbau-Verbundprofile mit offenen Profilquerschnitten oder mit geschlossenen (einzellig oder mehrzellig) Hohlquerschnitten ermöglicht, die aus einem Kern aus einem leichten Verbundwerkstoff mit integrierter verstärkter Außenschicht und gegebenenfalls zusätzlich einer integrierten verstärkten Innenschicht bestehen.

Unter Leichtbau-Verbundwerkstoff wird hierin allgemein ein Werkstoff verstanden, der ein Matrixmaterial und mindestens ein leichtes Füllstoffmaterial aufweist. Die leichten Verbundwerkstoffe für die Kerne der erfindungsgemäßen Sandwichelemente bzw. erfindungsgemäßen Leichtbauverbundprofile können zellulare verbundwerkstoffe, wie die kunststoffgebundenen oder metallgebundenen Leichtbau-Verbundwerkstoffe auf der Basis von Mineralschaumgranulaten sein, wie beispielsweise offenbart in der EP 1 188 730 A2 und der EP 0 851 808 B1. Ebenfalls in Frage kommen zellulare Leichtbau-Verbundwerkstoffe auf der Basis von Metallschaumgranulaten oder Verbundwerkstoffe bestehend aus Hohlkugeln oder Mikrohohlkugeln (Glas, Keramik oder Metall) in einer Kunststoff- oder Metallmatrix oder sonstige syntaktische Schäume, z.B. syntaktischen Schäume auf der Basis von Mineralschaumgranulaten.

Als Matrixmaterial können vorzugsweise Polyamide, Acrylate oder andere Kunststoffe mit entsprechend dem Füllmaterial gewählter Viskosität (beispielsweise < 0,1 - 5 Pas) der Monomere bzw. des Polymers verwendet werden. Für die Herstellung einer Metallmatrix können Schmelzen aus Leichtmetall, wie zum Beispiel Aluminium oder Zink verwendet werden. Der Volumenanteil der leichten Schaumgranulate oder Hohlkugeln (inklusive Volumen der Hohlräume der Hohlkugeln) kann bis zu 60 % des gesamten Sandwich-Volumens betragen. Die Schaumgranulate oder Hohlkugeln können abhängig von der Sandwichdicke Durchmesser zwischen 0,5 mm - 16 mm haben. Gängige Durchmesserfraktionen (übliche Sieblinien) sind (1-2 mm), (2-4 mm) und (4-6 mm). Die Dichte der Schaumgranulate liegt üblicherweise zwischen 0,1 kg/dm³ und 1,0 kg/dm³. Gängige Dichten der Hohlkugeln liegen bei 0,1 kg/dm³ bis 0,9 kg/dm³.

Die Fasern der ein oder mehrlagigen Faserstruktur können unidirektional oder in verschiedenen Richtungen angeordnet sein. Die Dicke des Deckschichtbereichs, in dem das Fasermaterial in das Matrixmaterial des Kernbereichs integriert ist, liegt üblicherweise zwischen 2 % - 12 % der Dicke des gesamten Sandwiches.

Die erfindungsgemäßen Sandwichelemente in Form von Leichtbau-Verbundprofilen zeichnen sich durch hohe Biegesteifigkeiten und hohe Festigkeiten bei geringem Gewicht aus. Neben einfachen Sandwichgeometrien, wie geraden Balken und ebenen Platten, können auch komplexe Geometrien, wie gekrümmte Balken und ein- oder mehrfach gekrümmte Schalen hergestellt werden. Im Vergleich zu Sandwichelementen mit Kernen aus klassischen zellularen Werkstoffen (reine Metall- oder Kunststoffschäume) weisen die erfindungsgemäßen Sandwichelemente mit zellularen Leichtbau-Verbundwerkstoffen aufgrund der speziellen Granulat- bzw. Kugel- oder Hohlkugelstruktur eine relativ hohe Schubfestigkeit auf. Instabilitätsprobleme, wie Knicken oder Knittern der Deckschichten, können aufgrund des integralen Aufbaus vermieden bzw. auf höhere Kraftniveaus geschoben werden. Die hohen spezifischen Druck- und Schubsteifigkeiten und -festigkeiten verringern das Zusammendrücken der Deckschichten bei Druck- und Schubbelastung. Damit ist die neuartige Struktur günstig für lokale Krafteinleitungen. Bei den neuartigen Leichtbau-Verbundprofilen kann das Beulen aufgrund der Stützwirkung des Kernmaterials vermieden werden und damit eine Erhöhung des Leichtbaugrades erreicht werden. Es können neben voll ausgefüllten Profilen auch Hohlprofile mit geschlossenen und offenen Querschnitten hergestellt werden. Weiterhin verfügen die erfindungsgemäßen Sandwichelemente und Leichtbau-Verbundprofile aufgrund ihrer zellularen (überwiegend geschlossenporigen) Struktur über ein günstiges Energieabsorptionsverhalten und Schallabsorptionsverhalten.

Durch das erfindungsgemäße Verfahren können Sandwichelemente aus zellularen Verbundwerkstoffen mit integrierten verstärkten Schichten und Leichtbau-Verbundprofile mit Stützkern aus zellularen Verbundwerkstoffen und integrierten verstärkten Deckschichten hergestellt werden. Die für Sandwichelemente und Leichtbau-Verbundprofile erforderliche feste und dehnsteife Deckschicht wird innerhalb des Kernherstellungsprozesses integriert hergestellt.

Ein nachträgliches Verbinden (z.B. Aufkleben) der Deckschichten für die Übertragung der Zug/Druckkräfte sowie Schubkräfte entfällt. Die bei Sandwichkonstruktionen notwendigen Eckabschlüsse sowie Kantenschutz sowie Anschlüsse sowie Verstärkungen für Krafteinleitungen oder Lagerungen können ebenfalls in den hier beschriebenen Herstellungsprozess integriert werden.

Der vorteilhafte Einsatz der beschriebenen Sandwichelemente bezieht sich auf Leichtbaustrukturen, die einer Querkraftbiegebeanspruchung unterliegen. Dies sind z.B. Fußböden oder Gepäckraumböden in Flugzeugen, Omnibussen, Booten, Schiffen oder Automobilen. Bei Kleintransportern oder Pickups können die Ladeflächen und Fahrerhausrückwände mit dem beschriebenen Sandwichaufbau vorteilhaft gestaltet werden. Im Baubereich können die beschriebenen Sandwichelemente für Doppelböden (oberer Boden z.B. in Computerräumen) oder als Leichtbau-Zwischenwände, Leichtbau-Deckenelemente oder Türen und Tore eingesetzt werden. Im Flugzeugbau oder Schiffbau können auch Zwischenwände (z.B. Druckkalotten) als Sandwichelement mit dem beschriebenen Aufbau hergestellt werden. Im Automobilbereich kann der beschriebene Sandwichaufbau beispielsweise in der Bodengruppe als Kofferraumboden oder für die Lehne der Rücksitzbank eingesetzt werden. Die Rücksitzlehne kann geteilt sein (z.B. ein Drittel zu zwei Dritteln), was zu einer sehr hohen Querkraftbiegebeanspruchung führt, insbesondere, wenn für den mittleren Sitzplatz ein Dreipunktgurt eingesetzt werden soll. Eine weitere hohe Querkraftbeanspruchung entsteht beim Crash, wenn ein schweres Gepäckstück vom Kofferraum auf die Rücksitzlehne stößt. Hier kommt neben der hohen Biegesteifigkeit und Biegefestigkeit auch die hohe Energieabsorption der beschriebenen Sandwichelemente zum Tragen. Dieser Vorteil kommt auch bei dem Einsatz eines Sandwichelements im Bereich der Rückwand eines Kleintransporters, LKWs oder Wohnmobils (Schutz der Insassen vor der Ladung bei einem Crashfall) zur Geltung.

Mit den beschriebenen Sandwichelementen können z.B. Leichtbau-Formteile der Freizeitindustrie, wie z.B. Skateboards, Skier oder Snowboards, mit günstigeren mechanischen und akustischen Eigenschaften, insbesondere bei stoßartigen Beanspruchungen, hergestellt werden (beispielsweise Lärmschutz beim Skateboardfahren in Wohngegenden). Ein weiteres Einsatzgebiet ist die Möbelbranche. Hier sind die Sandwichelemente als leichte, steife und feste Tischplatten oder Arbeitsplatten (z.B. in Küchen oder Werkstätten) einsetzbar.

Vorzugsweise kann an dem Leichtbau-Formteil mindestens ein seitlicher Deckschichtbereich in Form eines Umleimers oder Kantenschutzes oder Eckenschutzes vorgesehen sein.

Vorzugsweise kann an dem Leichtbau-Formteil mindestens ein Krafteinleitungselement (lokale Verstärkung des Kernbereichs) vorgesehen sein.

Vorzugsweise kann an dem Leichtbau-Formteil mindestens ein Strukturbauteil-Anschluss vorgesehen sein (Mitten- oder Eckanschluss).

Der vorteilhafte Einsatz der beschriebenen Leichtbau-Verbundprofile bezieht sich auf Leichtbaustrukturen, die einer Querkraftbiegebeanspruchung und/oder einer Druckbeanspruchung unterliegen. Hier unterdrückt der leichte Stützkern das Beulen der Leichtbaustruktur. Damit lassen sich höhere Leichtbaugrade erzielen als dies mit gewichtsgleichen dünnwandigen Monostrukturen oder vollausgefüllten Profilen erreichbar ist. Die beschriebenen Leichtbauverbundprofile können als Crashelemente (z.B. Crashbox im PKW-Frontbereich oder im Frontbereich von Nutzfahrzeugen) für die Verbesserung der passiven Sicherheit des PKWs oder Nutzfahrzeugs eingesetzt werden.

In den Unteransprüchen finden sich vorteilhafte Weiterbildungen und Verbesserungen des in Anspruch 1 angegebenen Leichtbau-Formteils bzw. des in Anspruch 14 angegebenen Herstellungsverfahrens.

### ZEICHNUNGEN

Ausführungsbeispiele der Erfindung sind in den Zeichnungen dargestellt und in der nachfolgenden Beschreibung näher erläutert.

Es zeigen:
- Fig. 1: eine schematische Querschnittsansicht eines Leichtbau-Formteils gemäss einer ersten Ausführungsform der vorliegenden Erfindung;
- Fig. 2: eine schematische Querschnittsansicht eines Leichtbau-Formteils in Hohlprofilform gemäss einer zweiten Ausführungsform der vorliegenden Erfindung;
- Fig. 3a)-d): schematische perspektivische Ansichten zur Erläuterung eines Herstellungsverfahrens für ein Leichtbau-Formteil gemäss einer dritten Ausführungsform der vorliegenden Erfindung;
- Fig. 4: eine perspektivische Ansicht zur Erläuterung einer modifizierten Form für das Herstellungsverfahrens für ein Leichtbau-Formteil gemäss der dritten Ausführungsform der vorliegenden Erfindung;
- Fig. 5a)-c): schematische perspektivische Ansichten zur Erläuterung eines Herstellungsverfahrens für ein Leichtbau-Formteil gemäss einer vierten Ausführungsform der vorliegenden Erfindung;
- Fig. 6: eine perspektivische Ansicht zur Erläuterung einer Form für ein Herstellungsverfahrens für ein Leichtbau-Formteil gemäss einer fünften Ausführungsform der vorliegenden Erfindung; und
- Fig. 7: Dreipunktbiegung von Sandwichbalken mit verklebten bzw. integrierten Deckschichten.

### BESCHREIBUNG DER AUSFÜHRUNGSBEISPIELE

In den Figuren bezeichnen gleiche Bezugszeichen gleiche oder funktionsgleiche Elemente.

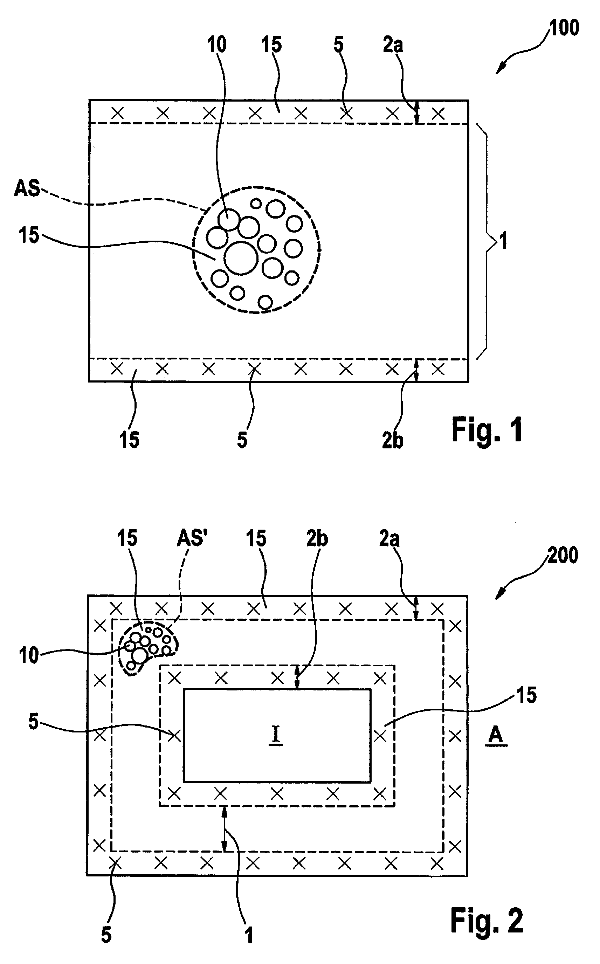

Fig. 1 zeigt eine schematische Querschnittsansicht eines Leichtbau-Formteils gemäss einer ersten Ausführungsform der vorliegenden Erfindung.

In Figur 1 bezeichnet Bezugszeichen 100 ein Leichtbau-Formteil aus einem Leichtbau-Verbundwerkstoff 10, 15 der ein Matrixmaterial 15 und ein Füllstoffmaterial 10 aufweist. Beim vorliegenden Beispiel besteht das Füllstoffmaterial 10 beispielsweise aus Hohlkugeln oder Schaumgranulaten mit einem Durchmesser zwischen 4 mm und 6 mm, wohingegen das Matrixmaterial ein ausgehärteter Kunststoff auf Polyamidbasis ist. Zur Vereinfachung der Darstellung ist in Figur 1 nur ein gestrichelt umrandeter Ausschnitt AS des Kernbereichs 1 dargestellt. Weiterhin weist das Leichtbau-Formteil 100 einen ersten oberseitigen oberflächlichen Deckschichtbereich 2a und einen zweiten unterseitigen oberflächlichen Deckschichtbereich 2b auf, der jeweils ein Fasermaterial 5 aufweist, welches in das Matrixmaterial 15 des Kernbereichs integriert ist. Dabei bezeichnet die gestrichelte Linie in Figur 1 eine virtuelle Grenze des Kernbereichs, bis zu der hin sich das Füllstoffmaterial 10 erstreckt. Aufgrund der Durchmesser des Füllstoffmaterials 10 und des Fasermaterials 5 liegt kein Füllstoffmaterial 10 im Deckschichtbereich 2 vor, sondern lediglich das Matrixmaterial 15 erstreckt sich einteilig durchgehend vom Kernbereich 1 in den Deckschichtbereich 2.

Ein einzelner oberflächlicher Deckschichtbereich 2a bzw. 2b bzw. weitere zusätzliche seitliche Deckschichtbereiche wären selbstverständlich ebenfalls möglich.

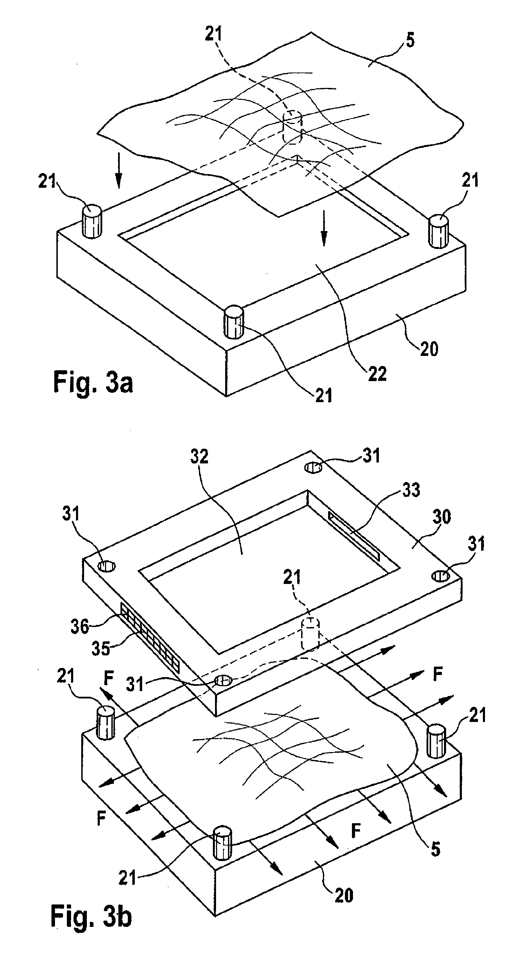

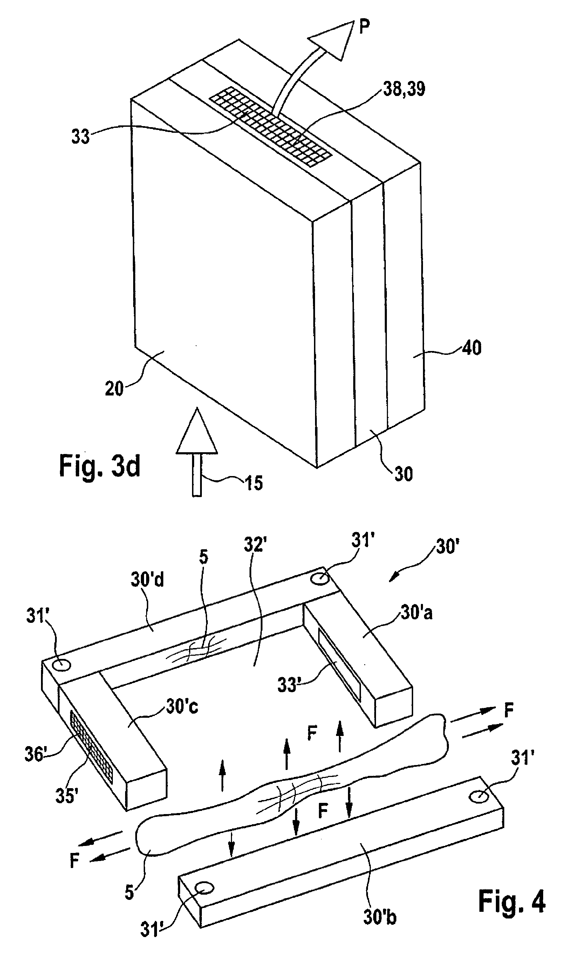

Das sandwichartige Leichtbau-Formteil 100 gemäß Figur 1 ist bei diesem Beispiel ein schmaler oder breiter, flacher oder gekrümmter Körper mit viereckigem Querschnitt. Die spezielle Formgebung erfolgt in einem Herstellungsverfahren, welches weiter unten mit Bezug auf Figur 3a) - d) erläutert wird.

Fig. 2 zeigt eine schematische Querschnittsansicht eines Leichtbau-Formteils in Hohlprofilform gemäss einer zweiten Ausführungsform der vorliegenden Erfindung.

Das Leichtbau-Formteil 200 gemäß Figur 2 weist eine Hohlprofilform auf, also eine röhrenförmige Ausgestaltung, wobei Bezugszeichen A einen Außenraum und Bezugszeichen I einen Innenraum der Röhre bezeichnet. Bei dieser Ausführungsform sind ein äußerer faserverstärkter Deckschichtbereich 2a als Grenze zum Außenraum A und ein innerer faserverstärkter Deckschichtbereich 2b als Grenze zum Innenraum I vorgesehen. Der Kernbereich 1 entspricht, wie im Ausschnitt AS' dargestellt, dem Kernbereich des Leichtbau-Formteils gemäß Figur 1.

Ein einzelner oberflächlicher Deckschichtbereich 2a bzw. 2b bzw. weitere zusätzliche stirnseitige Deckschichtbereiche wären selbstverständlich ebenfalls möglich.

Fig. 3a)-d) zeigen schematische perspektivische Ansichten zur Erläuterung eines Herstellungsverfahrens für ein Leichtbau-Formteil gemäss einer dritten Ausführungsform der vorliegenden Erfindung.

In Figur 3a) bezeichnet Bezugszeichen 20 ein Formteil in Gestalt eines Formdeckels mit einer zentralen Aussparung 22 und Ausrichtstiften 21. In einem ersten Prozessschritt erfolgt ein Aufbringen der erforderlichen Lage bzw. Lagen aus Fasermaterial 5 (zum Beispiel Vliese, Bänder, Gewirke, Gestricke, Gelege oder Gewebe aus Kohlenstoff-, Glas-, Aramid-, oder Metallfasern oder sonstige Fasern) für einen ersten Deckschichtbereich auf das horizontal aufgestellte Formteil 20, wobei die Lage bzw. die Lagen aus Fasermaterial 5 über die Aussparung 22 gespannt wird. Die Aussparung 22 hat typischerweise eine konstante Tiefe von 0,1 - 0,5 mm, um eine gute Überdeckung der Lage aus Fasermaterial 5 mit dem später einzubringenden Matrixmaterial zu ermöglichen.

Weiter mit Bezug auf Figur 3b) erfolgt ein Spannen der Lage bzw. Lagen aus Fasermaterial 5 in Richtung der Pfeile F und ein Aufsetzen eines Spannrahmens 30 ringförmiger Gestalt mit einer zentralen Durchgangsöffnung 32, Ausrichtungslöchern 31, einer Einfüllöffnung 33 für das Füllstoffmaterial und einer Angussöffnung 35 für das Matrixmaterial mit integriertem Abdeckgitter 36 und mit einem (nicht gezeigten) anbringbaren Verschlussdeckel.

Optional können ein oder mehrere Absaugvliese zwischen das horizontal aufgestellte Formteil 20 und die Lage bzw. Lagen aus Fasermaterial 5 eingelegt werden.

Die Einfüllöffnung 33 für das Füllstoffmaterial dient später auch als Absaug- bzw. Entlüftungsöffnung beim Abgießen des Matrixmaterials. Das in die Angussöffnung 35 integrierte Abdeckgitter 36 dient zum Rückhalten des später einzufüllenden Füllstoffmaterials (beispielsweise Granulate bzw. Hohlkugeln). Der anzubringende Verschlussdeckel verschließt vor dem Einfüllen des Füllmaterials die betreffende Seite des Spannrahmens vollständig. Die Einfüllöffnung 33 kann an eine Absaugung angeschlossen werden.

Das Anbringen des Spannrahmens 30 erfolgt derart, dass die Ausrichtstifte 21 des Formteils 20 in die Ausrichtlöcher 31 des Spannrahmens 30 eingeführt werden und beide Teile zusammengepresst werden. Der aufgesetzte und angepresste Spannrahmen 30 kann mit dem Formteil 20 über (nicht gezeigte) geeignete Spannverbindungen (z.B. Clips bzw. Klammern oder Schrauben) dauerhaft verbunden werden, damit die Vorspannung der Lage aus Fasermaterial 5 für den weiteren Montageprozess erhalten bleibt.

Nach einem optionalen Auflegen und Spannen einer weiteren Lage aus Fasermaterial auf ein weiteres Formteil 40 in Gestalt eines Formdeckels, welches identisch zum oben beschriebenen Formteil 20 ist, wird das zweite Formteil 40, welches je nach Verwendung einer weiteren Lage bzw. weiteren Lagen aus Fasermaterial entweder mit oder ohne Aussparung ausgestattet ist, von der anderen Seite auf den Spannrahmen 30 aufgesetzt, angepresst und verklemmt, was analog zur Verbindung des Formteils 20 mit dem Spannrahmen 30 erfolgt.

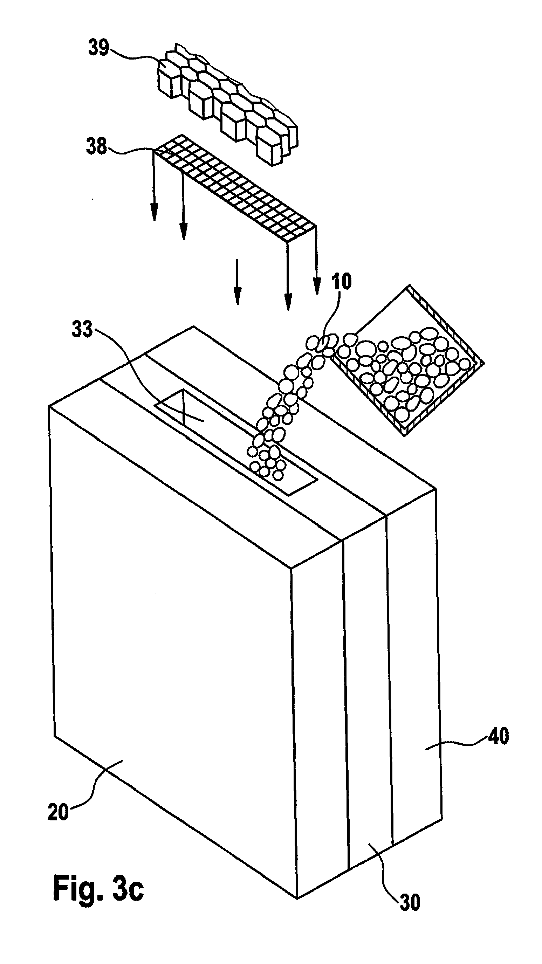

Nach dem Aufstellen der Gesamtform bestehend aus den Formteilen 20 und 40 sowie dem dazwischen geklemmten Spannrahmen 30, wie in Figur 3c) gezeigt, wird das Füllstoffmaterial durch die Einfüllöffnung 33 in die Gesamtform durch die nach oben ausgerichtete Einfüllöffnung 33 eingefüllt. Im vorliegenden Beispiel besteht das Füllstoffmaterial 10 aus Hohlkugeln (beispielsweise Glas, Metall oder Keramik) oder Schaumgranulaten. Der Einfüllvorgang kann beispielsweise durch Kippen oder Einrütteln unterstützt werden. Wenn die Gesamtform 20, 30, 40 vollständig gefüllt ist, wird ein weiteres Abdeckgitter 38 (analog zum Abdeckgitter in der Angussöffnung 35) in die Einfüllöffnung 33 eingesetzt, wonach eine Stützwabe 39 in die Einfüllöffnung 33 eingesetzt wird.

Das Abdeckgitter 38 und die Stützwabe 39 dienen zur Kompensation der Auftriebskräfte bei der Infiltration und/oder zur Kompensation der auftretenden Drücke beim Druckgießverfahren. In einem anschließenden Prozessschritt wird die Einfüllöffnung 33 an eine Vakuumpumpe P angeschlossen oder mit einem Entlüftungsdeckel abgedeckt.

Im Anschluss daran erfolgt ein Einbringen des flüssigen Matrixmaterials 15 von unten (zur Vermeidung von Blasenbildung) über die Angussöffnung 35 durch das Abdeckgitter 36 hindurch. Durch das Auffüllen der Form 20, 30, 40 mit dem Matrixmaterial 15 erfolgt ein Infiltrieren der Schüttung aus dem Füllstoffmaterial 10 und der Lagen bzw. Lage aus dem Fasermaterial 5 mit dem Matrixmaterial, welches beispielsweise ein Gusspolyamid oder ein Mehrkomponenten-Acrylharz oder ein anderes organisches System oder eine Metallschmelze ist.

Im Anschluss daran erfolgt eine Polymerisation bzw. eine Erstarrung des Matrixmaterials 15.

Nach vollständiger Erstarrung des Matrixmaterials 15 erfolgen eine Entformung und ein Finishing, ggf. ein Zuschneiden bzw. Wegpolieren des überstehenden Fasermaterials 5.

Seitlich überstehendes Fasermaterial kann auch durch ein entsprechendes Ablängen oder Umbiegen bzw. einen Nähprozess vor dem Formungsprozess vermieden werden (ebenfalls eine Fixierung über Form- oder Stoffschluss ist möglich). Auch mit der nachträglichen Aufbringung eines Umleimers bei einer endkonturnahen Sandwichplatte kann das Problem überstehender Fasern gelöst werden. Bei der Herstellung von großen Sandwichplatten können kleinere Platten herausgesägt werden, sodass dadurch auch seitlich überstehende Fasern entfernt werden.

Für eine kostengünstige Herstellung der Sandwichelemente können die vorstehend genannten Prozessschritte automatisiert werden durch Einsatz von Robotern bzw. hydraulischen Anlagen.

Fig. 4 zeigt eine perspektivische Ansicht zur Erläuterung einer modifizierten Form für das Herstellungsverfahrens für ein Leichtbau-Formteil gemäss der dritten Ausführungsform der vorliegenden Erfindung.

Bei der in Figur 4 gezeigten Ausführungsform wird anstelle des einteiligen Spannrahmens 30 gemäß Figur 3b) ein mehrteiliger Spannrahmen 30' mit Ausrichtungslöchern 31' und zentraler Durchgangsöffnung 32' verwendet. Der mehrteilige Spannrahmen 30' enthält vier Seitenteile 30'a, 30'b, 30'c und 30'd, welche über (nicht dargestellte) Spannverbindungen fest miteinander verbindbar sind.

Wie in Figur 4 dargestellt, ermöglicht ein derartiger mehrteiliger Spannrahmen 30' die Integration von Lagen aus Fasermaterial 5 an den Seitenflächen der späteren Sandwichstruktur, welche beispielsweise als Kantenschutz für die Sandwichstruktur dienen. Die Spannverbindung kann ebenfalls mittels Clips bzw. Schrauben realisiert werden.

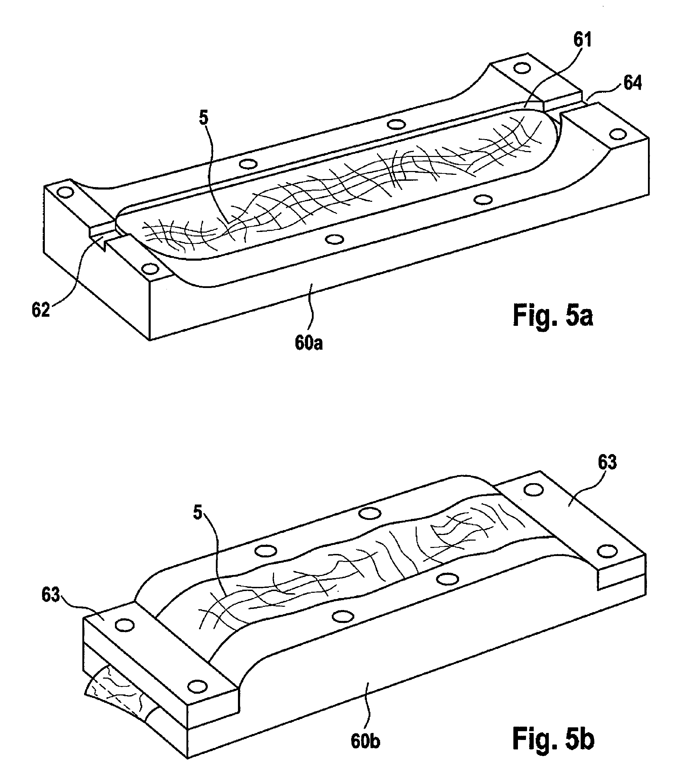

Fig. 5a)-c) zeigen schematische perspektivische Ansichten zur Erläuterung eines Herstellungsverfahrens für ein LeichtbauFormteil gemäss einer vierten Ausführungsform der vorliegenden Erfindung.

Insbesondere ist in Figur 5a)-c) ein konkretes Anwendungsbeispiel des mit Bezug auf Figur 3a) - d) ausführlich erläuterten Verfahrens gezeigt, und zwar die Herstellung eines Formteils für ein Skateboard bzw. Snowboard.

Mit Bezug auf Figur 5a) wird eine untere Formhälfte 60a bereitgestellt, welche eine Aussparung 61 aufweist, die der späteren Sandwichdicke des Skateboards entspricht. Analog zur Gesamtform gemäß Figur 3a)-d) weist das untere Formteil 60a eine Angussöffnung 62 und eine Einfüllöffnung 64 auf. Eingelegt in die Aussparung 61 wird eine erste Lage aus Fasermaterial 5. Das Spannen der ersten Lage aus Fasermaterial 5 kann mechanisch bzw. durch einen Kleber erfolgen. Optional kann eine Lage aus Fasermaterial als Umleimer bzw. Kantenschutz an den Rändern der Vertiefung 61 angebracht werden.

Gemäß Figur 5b) wird eine zweite Formhälfte 60b bereitgestellt, auf der eine Lage aus Fasermaterial 5 für die obere Deckschicht des Skateboards bereitgestellt wird, welche mittels Spannklötzen 63 verspannt wird. Optional kann auch die obere Formhälfte 60b eine Vertiefung für die Lage aus Fasermaterial 5 aufweisen, um eine gute Überdeckung der Faserstruktur mit dem Matrixmaterial zu ermöglichen.

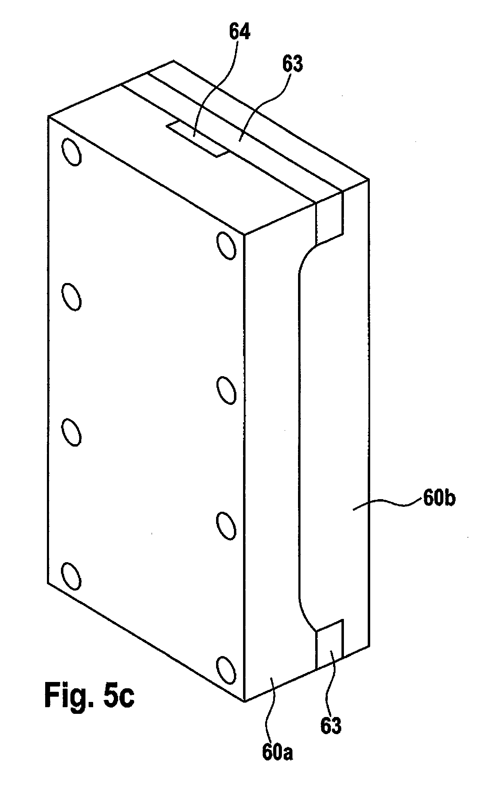

Nach Vorbereitung der beiden Formhälften 60a, 60b gemäß Figur 5a) bzw. b) wird die obere Formhälfte 60b um 180° gedreht und passgerecht auf die untere Formhälfte 60a aufgesetzt und mit dieser beispielsweise durch Verschrauben fest verbunden. Nach dem Aufstellen der Gesamtform 60a, 60b, wie in Figur 5c) dargestellt, kann das Füllstoffmaterial 10 über die Einfüllöffnung 64 eingefüllt werden und anschließend das Matrixmaterial 15 von unten über die Angussöffnung 62 eingebracht werden, wie ausführlich mit Bezug 3a) - d) beschrieben.

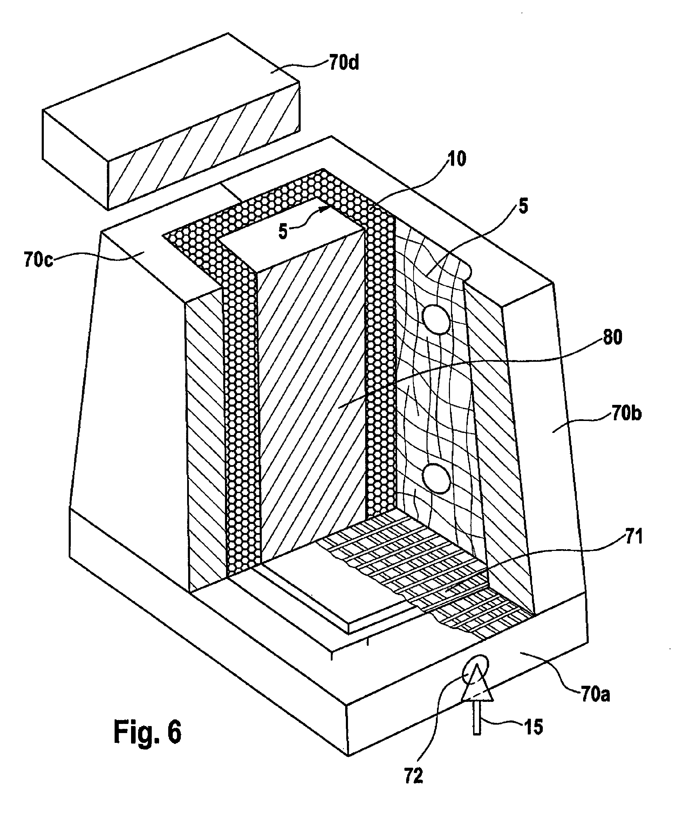

Fig. 6 zeigt eine perspektivische Ansicht zur Erläuterung einer Form für ein Herstellungsverfahrens für ein Leichtbau-Formteil gemäss einer fünften Ausführungsform der vorliegenden Erfindung.

Mit Bezug auf Figur 6 wird das Herstellungsverfahren für ein Leichtbau-Formteil in Form eines Hohlprofils gemäß Figur 2 näher erläutert.

Zunächst erfolgt ein Aufbringen, Spannen und Fixieren der äußeren Lage aus Fasermaterial 5 an den Wänden von Formhälften 70b, 70c, welche auf einer Form-Grundplatte 70a angebracht sind. Die Formhälften 70b, 70c sind in der Darstellung von Figur 6 nur teilweise im Aufriss dargestellt und sind tatsächlich umlaufend auf der Form-Grundplatte vorgesehen.

Weiterhin kann eine innere Lage aus Fasermaterial 5 auf einem Gießkern 80 angebracht werden, und der Gießkern wird auf die Form-Grundplatte 70a montiert. Somit ist ein Hohlprofil zwischen den Formhälften 70b, 70c und dem Gießkern erzeugt.

Im Anschluss an die Montage des Gießkerns 80 erfolgt ein Auffüllen des Hohlprofils mit dem Füllstoffmaterial 10, beispielsweise Mineralschaum- oder Glasschaum- oder Metallschaum-Granulat, was durch Einrütteln unterstützt werden kann. Anschließend wird die Oberseite der in Figur 6 gezeigten Form 70a, 70b, 70c mit einem (nicht gezeigten) Abdeckgitter, eine optionale perforierte Zwischenplatte und einem Verschlussdeckel 70d mit Vakuumabsaugung verschlossen. Dann wird die Form 70a, 70b, 70c, 70d von unten mit flüssigem Matrixmaterial, beispielsweise Kunststoff (Monomere oder Polymere) oder Metall, gefüllt, sodass eine Infiltration des Füllstoffmaterials 10 und der inneren und äußeren Lage aus Fasermaterial 15 erfolgt. Ein Entweichen der Luft erfolgt über eine Öffnung in dem andeutungsweise illustrierten oberen Verschlussdeckel 70d und über die daran angeschlossene Vakuumpumpe. Das integrierte Abdeckgitter sowie die optionale perforierte Zwischenplatte dienen dabei zur Fixierung des Füllstoffmaterials 10, um den Auftriebskräften bzw. Druckkräften des Druckgießverfahrens entgegen zu wirken.

Nach Polymerisation bzw. Erstarrung erfolgt eine Entformung einschließlich eines Ziehens des Kerns und eines Finishing (ggf. Zuschneiden der überstehenden Fasern).

Für ein einfacheres Ziehen des Gießkerns 80 (thermisches Schrumpfen des Gussteils beim Abkühlen) kann dieser ggf. geteilt ausgeführt werden. Es kann auch ein verlorener Kern verwendet werden. Verlorene Kerne können z.B. ausgerüttelt, ausgeschmolzen oder ausgewaschen werden.

Fig. 7 zeigt Dreipunktbiegeversuche an Sandwichbalken mit aufgeklebten (beide Kurven I) bzw. integrierten Deckschichten (beide Kurven II). Die Kerne bestehen aus zellularem Verbundwerkstoff mit Glasschaumgranulaten, die in Acrylharz eingebettet sind. Durch die Integration der Deckschicht erhöht sich die Festigkeit des Sandwichbalkens um bis zu 200% im Vergleich zu Sandwichbalken mit aufgeklebten Deckschichten.

Obwohl die vorliegende Erfindung anhand bevorzugter Ausführungsbeispiele vorstehend beschrieben wurde, ist sie darauf nicht beschränkt, sondern auf vielfältige Weise modifizierbar.

Obwohl bei den oben beschriebenen Ausführungsformen nur ein bzw. zwei Deckschichtbereiche dargestellt worden sind, kann ein erfindungsgemäßes Leichtbau-Formteil beliebig viele Deckschichtbereiche aufweisen bzw. vollständig von einem einzigen Deckschichtbereich umgeben sein.

## Patentansprüche

1. Leichtbau-Formteil mit:
einem Kernbereich (1) aus einem Leichtbau-Verbundwerkstoff (10, 15), der ein Matrixmaterial (15) und mindestens ein Füllstoffmaterial (10) aufweist;
mindestens einem oberflächlichen oder oberflächennahen Deckschichtbereich (2a, 2b), der mindestens eine Lage aus Fasermaterial (5) und das Matrixmaterial (15) aufweist;
wobei die Lage bzw. die Lagen aus Fasermaterial (5) des Deckschichtbereichs (2a, 2b) in das Matrixmaterial (15) des Kernbereichs (1) integriert sind; und
wobei der Leichtbau-Verbundwerkstoff (10, 15) ein durch ein Kunststoff-Matrixmaterial gebundener oder durch ein Metall-Matrixmaterial gebundener zellularer Verbundwerkstoff mit einem Mineralschaum- oder Metallschaum- oder Glasschaumgranulat als Füllstoffmaterial (10) ist.

2. Leichtbau-Formteil nach Anspruch 1, wobei das Fasermaterial (5) ein Band oder ein Vlies oder ein Gewebe oder ein Gelege oder ein Gestrick oder ein Gewirk aufweist.

3. Leichtbau-Formteil nach Anspruch 1 oder 2, wobei das Fasermaterial (5) mindestens eine der folgenden Fasertypen aufweist: Glasfasern, Kohlenstofffasern, Aramidfasern, Metallfasern.

4. Leichtbau-Formteil nach einem der vorhergehenden Ansprüche, welches ein ein- oder mehrzelliges geschlossenes oder ein offenes Profil aufweist.

5. Leichtbau-Formteil nach Anspruch 4, welches ein röhrenförmiges Profil aufweist, wobei ein erster äußerer Deckschichtbereich (2a) und/oder ein zweiter innerer Deckschichtbereich (2b) vorgesehen sind.

6. Leichtbau-Formteil nach einem der vorhergehenden Ansprüche, wobei ein Volumenanteil des Füllstoffmaterials (10) einschließlich innerer Hohlräume des Füllstoffmaterials (10) zwischen 40% und 60% beträgt.

7. Leichtbau-Formteil nach einem der vorhergehenden Ansprüche 1 bis 5, wobei ein Volumenanteil des Füllstoffmaterials (10) einschließlich innerer Hohlräume des Füllstoffmaterials (10) zwischen 30% und 50% beträgt.

8. Leichtbau-Formteil nach einem der vorhergehenden Ansprüche, wobei das Füllstoffmaterial (10) nur im Kernbereich (1) vorliegt.

9. Leichtbau-Formteil nach einem der vorhergehenden Ansprüche, wobei das Füllstoffmaterial (10) sowohl im Kernbereich (1) als auch im Deckschichtbereich (2) vorliegt.

10. Herstellungsverfahren für ein Leichtbau-Formteil nach Anspruch 1 mit den Schritten:
Bereitstellen einer Form (20, 30, 40; 60a, 60b; 70a, 70b, 70c, 70d) mit einem Hohlraum entsprechend der Außenkonturen des herzustellenden Leichtbau-Formteils;
Anbringen mindestens einer Lage aus einem Fasermaterial (5) entsprechend einem oberflächlichen oder oberflächennahen Deckschichtbereich (2a, 2b) des herzustellenden Leichtbau-Formteils im Hohlraum der Form (20, 30, 40; 60a, 60b; 70a, 70b, 70c, 70d);
Einschütten eines Füllstoffmaterials (10) in den Hohlraum der Form (20, 30, 40; 60a, 60b; 70a, 70b, 70c, 70d);
Auffüllen des Hohlraums der Form (20, 30, 40; 60a, 60b; 70a, 70b, 70c, 70d) mit einem härtbaren flüssigen Matrixmaterial (15), so dass die Lage bzw. die Lagen aus dem Fasermaterial (5) und die Schüttung aus dem Füllstoffmaterial (10) infiltriert werden;
Aushärten des Matrixmaterials (15), wobei die Lage bzw. die Lagen aus Fasermaterial (5) des Deckschichtbereichs (2a, 2b) in das Matrixmaterial (15) des Kernbereichs (1) integriert und wodurch das Leichtbau-Formteil gebildet wird; und
Entformen des gebildeten Leichtbau-Formteils.

11. Herstellungsverfahren für ein Leichtbau-Formteil nach Anspruch 10, wobei die Form (20, 30, 40; 60a, 60b; 70a, 70b, 70c, 70d) mehrteilig ist und das Anbringen der mindestens einen Lage aus einem Fasermaterial (5) vor dem Zusammenbau der Form (20, 30, 40; 60a, 60b; 70a, 70b, 70c, 70d) erfolgt.

12. Herstellungsverfahren für ein Leichtbau-Formteil nach Anspruch 10 oder 11, wobei die Form (20, 30, 40; 60a, 60b; 70a, 70b, 70c, 70d, 80) eine erste und eine zweite Öffnung (33, 35; 33', 35'; 62, 64) aufweist, von denen die eine zum Auffüllen des Hohlraums mit dem Füllstoffmaterial (10) und von denen die andere zum Auffüllen des Hohlraums mit dem Matrixmaterial (15) verwendet wird.

13. Herstellungsverfahren für ein Leichtbau-Formteil nach einem der Ansprüche 10 bis 12, wobei ein Gießkern (80) entsprechend der Innenkonturen des herzustellenden Leichtbau-Formteils in den Hohlraum der Form (70a, 70b, 70c, 70d) eingebracht wird.

14. Herstellungsverfahren für ein Leichtbau-Formteil nach Anspruch 13, wobei ein Anbringen mindestens eine Lage aus einem Fasermaterial (5) entsprechend einem weiteren oberflächlichen oder oberflächennahen Deckschichtbereich (2a, 2b) des herzustellenden Leichtbau-Formteils auf dem Gießkern (80) angebracht wird.

15. Herstellungsverfahren für ein Leichtbau-Formteil nach einem der Ansprüche 10 bis 14, wobei nach dem Entformen ein Finishing in Form eines Zuschneidens oder Wegschleifens überstehenden Fasermaterials (5) erfolgt.

16. Herstellungsverfahren für ein Leichtbau-Formteil nach einem der Ansprüche 10 bis 15, wobei in das flüssige Matrixmaterial (15) vor dem Auffüllen Mikrohohlkugeln eingemischt werden.

17. Herstellungsverfahren für ein Leichtbau-Formteil nach Anspruch 14 oder 15, wobei keine makroskopischen Granulate oder Hohlkugeln verwendet werden.

18. Herstellungsverfahren für ein Leichtbau-Formteil nach einem der Ansprüche 10 bis 15, wobei ein oder mehrere Absaugvliese zwischen die Form (20, 30, 40; 60a, 60b; 70a, 70b, 70c, 70d, 80) und die Lage bzw. Lagen aus Fasermaterial (5) eingelegt werden.

19. Leichtbau-Formteil nach einem der vorhergehenden Ansprüche 1 bis 9, wobei mindestens ein seitlicher Deckschichtbereich in Form eines Umleimers oder Kantenschutzes oder Eckenschutzes vorgesehen ist.

20. Leichtbau-Formteil nach einem der vorhergehenden Ansprüche 1 bis 9, wobei mindestens ein Krafteinleitungselement vorgesehen ist.

21. Leichtbau-Formteil nach einem der vorhergehenden Ansprüche 1 bis 9, wobei mindestens ein Strukturbauteil-Anschluss vorgesehen ist.

## Claims

1. Lightweight moulded part comprising:
a core region (1) made of a lightweight composite material (10, 15) and comprising a matrix material (15) and at least one filler material (10);
at least one surface or near-surface cover layer region (2a, 2b) which comprises at least one layer of fibre material (5) and the matrix material (15);
wherein the layer or layers of fibre material (5) of the cover layer region (2a, 2b) are integrated into the matrix material (15) of the core region (1); and
wherein the lightweight composite material (10, 15) is a cellular composite material bound by a plastic matrix material or by a metal matrix material including a mineral foam or metal foam or gloss foam granulate as the filler material (10).

2. Lightweight moulded part according to claim 1, wherein the fibre material (5) comprises a band or a non-woven material or a woven material or a bonded material or a knitted fabric or a knitted material.

3. Lightweight moulded part according to either claim 1 or claim 2, wherein the fibre material (5) comprises at least one of the following fibre types: glass fibres, carbon fibres, aramid fibres, metal fibres.

4. Lightweight moulded part according to any one of the preceding claims, which comprises a single-cell or multi-cell closed profile or an open profile.

5. Lightweight moulded part according to claim 4, which comprises a tubular profile, wherein a first outer cover layer region (2a) and/or a second inner cover layer region (2b) are provided.

6. Lightweight moulded part according to any one of the preceding claims, wherein the proportion of the filler material (10) by volume, including internal hollow spaces of the filler material (10), is between 40 % and 60 %.

7. Lightweight moulded part according to any one of claims 1 to 5, wherein the proportion of the filler material (10) by volume, including internal hollow spaces of the filler material (10), is between 30 % and 50 %.

8. Lightweight moulded part according to any one of the preceding claims, wherein the filler material (10) is only present in the core region (1).

9. Lightweight moulded part according to any one of the preceding claims, wherein the filler material (10) is present in the core region (1) and also in the cover layer region (2).

10. Production method for a lightweight moulded part according to claim 1 comprising the following steps:
preparing a mould (20, 30, 40; 60a, 60b; 70a, 70b, 70c, 70d) with a hollow space corresponding to the outer contours of the lightweight moulded part which is to be produced;
applying at least one layer of a fibre material (5), corresponding to a surface or near-surface cover layer region (2a, 2b) of the lightweight moulded part which is to be produced, in the hollow space of the mould (20, 30, 40; 60a, 60b; 70a, 70b, 70c, 70d);
shaking a filler material (10) into the hollow space of the mould (20, 30, 40; 60a, 60b; 70a, 70b, 70c, 70d);
filling the hollow space of the mould (20, 30, 40; 60a, 60b; 70a, 70b, 70c, 70d) with a curable liquid matrix material (15) in such a way that the layer or layers of the fibre material (5) and the fill consisting of the filler material (10) are infiltrated;
curing the matrix material (15), the layer or layers of fibre material (5) of the cover layer region (2a, 2b) being integrated into the matrix material (15) of the core region (1), leading to the formation of the lightweight moulded part; and
demoulding the formed lightweight moulded part.

11. Production method for a lightweight moulded part according to claim 10, wherein the mould (20, 30, 40; 60a, 60b; 70a, 70b, 70c, 70d) is in a plurality of parts and the least one layer of a fibre material (5) is applied before the mould (20, 30, 40; 60a, 60b; 70a, 70b, 70c, 70d) is assembled.

12. Production method for a lightweight moulded part according to either claim 10 or claim 11, wherein the mould (20, 30, 40; 60a, 60b; 70a, 70b, 70c, 70d, 80) comprises a first and a second opening (33, 35; 33', 35'; 62, 64), one of which is used for filling the hollow space with the filler material (10) and the other of which is used for filling the hollow space with the matrix material (15).

13. Production method for a lightweight moulded part according to any one of claims 10 to 12, wherein a casting core (80) which corresponds to the inner contours of the lightweight moulded part to be produced is introduced into the hollow space of the mould (70a, 70b, 70c, 70d).

14. Production method for a lightweight moulded part according to claim 13, wherein at least one layer of a fibre material (5) which corresponds to a further surface or near-surface cover layer region (2a, 2b) of the lightweight moulded part to be produced is applied on the casting core (80).

15. Production method for a lightweight moulded part according to any one of claims 10 to 14, wherein after the demoulding process, a finishing process takes place in the form of trimming or grinding away projecting fibre material (5).

16. Production method for a lightweight moulded part according to any one of claims 10 to 15, wherein hollow microspheres are mixed into the liquid matrix material (15) before filling.

17. Production method for a lightweight moulded part according to either claim 14 or claim 15, wherein no macroscopic granules or hollow spheres are used.

18. Production method for a lightweight moulded part according to any one of claims 10 to 15, wherein one or more bleeders are positioned between the mould (20, 30, 40; 60a, 60b; 70a, 70b, 70c, 70d, 80) and the layer or layers of fibre material (5).

19. Lightweight moulded part according to any one of the preceding claims 1 to 9, wherein at least one lateral cover layer region is provided in the form of an edge band or edge protection or corner protection.

20. Lightweight moulded part according to any one of the preceding claims 1 to 9, wherein at least one force application element is provided.

21. Lightweight moulded part according to any one of the preceding claims 1 to 9, wherein at least one structural component attachment is provided.

## Revendications

1. Pièce moulée légère comportant :
- une région centrale (1) constituée d'un matériau composite léger (10, 15) qui comporte une matière matricielle (15) et au moins un matériau de charge (10) ;
- au moins une région de couche de recouvrement (2a, 2b) située à la surface ou à proximité de la surface, qui présente au moins une couche de matière fibreuse (5) et la matière matricielle (15) ;
dans laquelle la ou les couches de matière fibreuse (5) de la région de couche de recouvrement (2a, 2b) sont intégré(e)s dans la matière matricielle (15) de la région centrale (1) ; et
dans laquelle le matériau composite léger (10, 15) est un matériau composite cellulaire lié par une matière plastique matricielle ou lié par une matière métallique matricielle avec un granulat de mousse minérale, de mousse métallique ou de mousse de verre en tant que matériau de charge (10).

2. Pièce moulée légère selon la revendication 1, la matière fibreuse (5) présentant une bande, un non-tissé, un tissu, une nappe, un tricot ou un article à mailles.

3. Pièce moulée légère selon la revendication 1 ou 2, la matière fibreuse (5) présentant au moins un des types de fibres suivants : fibres de verre, fibres de carbone, fibres aramides, fibres métalliques.

4. Pièce moulée légère selon l'une des revendications précédentes, qui présente un profilé fermé mono ou multicellulaire ou un profilé ouvert.

5. Pièce moulée légère selon la revendication 4, qui présente un profilé de forme tubulaire, une première région de couche de recouvrement extérieure (2a) et/ou une seconde région de couche de recouvrement intérieure (2b) étant prévue(s).

6. Pièce moulée légère selon l'une des revendications précédentes, une part en volume du matériau de charge (10) y compris les cavités intérieures du matériau de charge (10) étant située entre 40 % et 60 %.

7. Pièce moulée légère selon une des revendications précédentes 1 à 5, une part en volume du matériau de charge (10) y compris les cavités intérieures du matériau de charge (10) étant située entre 30 % et 50 %.

8. Pièce moulée légère selon l'une des revendications précédentes, le matériau de charge (10) n'étant présent que dans la région centrale (1).

9. Pièce moulée légère selon l'une des revendications précédentes, le matériau de charge (10) étant présent autant dans la région centrale (1) que dans la région de couche de recouvrement (2).

10. Procédé de fabrication pour une pièce moulée légère selon la revendication 1 avec les étapes de :
- mise en oeuvre d'un moule (20, 30, 40 ; 60a, 60b ; 70a, 70b, 70c, 70d) avec une cavité correspondant aux contours extérieurs de la pièce moulée légère à fabriquer ;
- installation d'au moins une couche d'une matière fibreuse (5) en fonction d'une région de couche de recouvrement (2a, 2b) située à la surface ou à proximité de la surface de la pièce moulée à fabriquer dans la cavité du moule (20, 30, 40 ; 60a, 60b ; 70a, 70b, 70c, 70d) ;
- versement d'un matériau de charge (10) dans la cavité du moule (20, 30, 40 ; 60a, 60b ; 70a, 70b, 70c, 70d) ;
- remplissage de la cavité du moule (20, 30, 40 ; 60a, 60b ; 70a, 70b, 70c, 70d) avec une matière matricielle liquide durcissante (15), de telle sorte que la couche ou les couches de matière fibreuse (5) et le déversement de matériau de charge (10) sont infiltrées ;
- durcissement de la matière matricielle (15), la ou les couches de matière fibreuse (5) de la région de couche de recouvrement (2a, 2b) étant intégr(é)s dans la matière matricielle (15) de la région centrale (1) et entraînant la formation de la pièce moulée légère ; et
- démoulage de la pièce moulée légère formée.

11. Procédé de fabrication pour une pièce moulée légère selon la revendication 10, le moule (20, 30, 40 ; 60a, 60b ; 70a, 70b, 70c, 70d) étant constitué de plusieurs pièces et l'installation de l'au moins une couche d'une matière fibreuse (5) ayant lieu avant l'assemblage du moule (20, 30, 40 ; 60a, 60b ; 70a, 70b, 70c, 70d).

12. Procédé de fabrication pour une pièce moulée légère selon la revendication 10 ou 11, le moule (20, 30, 40 ; 60a, 60b ; 70a, 70b, 70c, 70d, 80) présentant une première et une seconde ouverture (33, 35 ; 33', 35' ; 62, 64), dont l'une est utilisée pour le remplissage de la cavité avec le matériau de charge (10) et dont l'autre est utilisée pour le remplissage de la cavité avec la matière matricielle (15).

13. Procédé de fabrication pour une pièce moulée légère selon l'une des revendications 10 à 12, un noyau de coulée (80) étant intégré en fonction des contours intérieurs de la surface de la pièce moulée à fabriquer dans la cavité du moule (70a, 70b, 70c, 70d).

14. Procédé de fabrication pour une pièce moulée légère selon la revendication 13, au moins une couche d'une matière fibreuse (5) étant installée sur le noyau de coulée (80) en fonction d'une autre région de couche de recouvrement (2a, 2b) située à la surface ou à proximité de la surface de la pièce moulée à fabriquer.

15. Procédé de fabrication pour une pièce moulée légère selon l'une des revendications 10 à 14, une finition ayant lieu après le démoulage sous la forme d'une découpe ou d'un polissage de la matière fibreuse (5) faisant saillie.

16. Procédé de fabrication pour une pièce moulée légère selon l'une des revendications 10 à 15, des microbilles étant incorporées à la matière matricielle liquide (15) avant le remplissage.

17. Procédé de fabrication pour une pièce moulée légère selon la revendication 14 ou 15, aucun granulat macroscopique ou aucune bille creuse n'étant utilisé(e).

18. Procédé de fabrication pour une pièce moulée légère selon l'une des revendications 10 à 15, un ou plusieurs non-tissés absorbants étant logé(s) entre le moule (20, 30, 40 ; 60a, 60b ; 70a, 70b, 70c, 70d, 80) et la couche ou les couches de matière fibreuse (5).

19. Pièce moulée légère selon une des revendications précédentes 1 à 9, au moins une région de couche de recouvrement latérale étant prévue sous la forme d'un chant ou d'un protège-bords ou d'un protège-coins.

20. Pièce moulée légère selon une des revendications précédentes 1 à 9, au moins un élément d'application de force étant prévu.

21. Pièce moulée légère selon une des revendications précédentes 1 à 9, au moins un raccordement de composant structurel étant prévu.
